# EUROPÄISCHE PATENTSCHRIFT

(11) **EP 1 608 542 B1**
(45) Veröffentlichungstag und Bekanntmachung des Hinweises auf die Patenterteilung: **06.09.2006**
(21) Anmeldenummer: 04740832.3
(22) Anmeldetag: 09.07.2004
(51) Int. Cl.: B60T 10/02

(54) **HYDRODYNAMISCHER RETARDER**
HYDRODYNAMIC RETARDER
RETARDATEUR HYDRODYNAMIQUE

(30) Priorität: 13.09.2003 DE 10342400
(43) Veröffentlichungstag der Anmeldung: 28.12.2005
(73) Patentinhaber: Voith Turbo GmbH & Co. KG, 89522 Heidenheim (DE)
(72) Erfinder: VOGELSANG, Klaus, 74564 Crailsheim (DE); HÖLLER, Heinz, 74564 Crailsheim (DE)
(74) Vertreter: Dr. Weitzel & Partner
(86) Internationale Anmeldenummer: PCT/EP2004/007545
(87) Internationale Veröffentlichungsnummer: WO 2005/032898

(56) Entgegenhaltungen:
- DE-A- 3 830 710
- US-A- 3 759 355
- US-A- 5 090 523
- US-A- 5 657 723

## Beschreibung

Die vorliegende Erfindung betrifft einen hydrodynamischen Retarder, insbesondere einen Wasserretarder, das heißt einen Retarder, dessen Arbeitsmedium Wasser oder ein Gemisch mit Wasser ist, insbesondere ein Wasser-Glykol-Gemisch, welches auch im Kühlkreislauf eines Fahrzeugs verwendet wird. Die Erfindung betrifft femer einen Kraftfahrzeugantrieb mit einem solchen Retarder.

Retarder und Kraftfahrzeugsantriebe beziehungsweise Antriebsstränge mit Retardern sind weithin bekannt und verbreitet. Der Retarder, auch hydrodynamische Bremse oder Strömungsbremse genannt, wird verwendet, um Fahrzeuge oder auch stationäre Anlagen verschleißarm abzubremsen. Durch eine zueinander zugewandte, benachbarte Anordnung von zwei Schaufelrädern, nämlich einem angetriebenen Rotorschaufelrad und einem feststehenden Statorschaufelrad, wird ein torusförmiger Arbeitsraum gebildet, in welchem ein Arbeitsmedium einen Strömungskreislauf ausbildet, mittels dessen Antriebsdrehmoment auf das feststehende Statorschaufelrad übertragen wird.

Die bisherige Entwicklungsarbeit hat sich hauptsächlich mit der Leistungsoptimierung und der Baugrößenoptimierung befasst. So sind heute eine Vielzahl von Maßnahmen bekannt, wodurch die Leistungsaufnahme des Retarders im Bremsbetrieb maximiert und im Leerlaufbetrieb minimiert werden konnte. Ferner weisen heutige Retarder eine äußerst geringe Baugröße auf, so dass sie platzsparend in einem Fahrzeug angeordnet werden können, wo für den Retarder zunehmend weniger Platz zur Verfügung steht. Mit der Eindämmung der Geräuschentwicklung von Retardern besonders im leistungsgesteigerten Bremsbetrieb hat man sich bis heute hingegen kaum befasst. Aufgrund der geringen Geräuschemissionen von Fahrzeugantriebssträngen, wie man sie heute kennt, ist es notwendig, auch die Geräuschemission von Retardern zu vermindern, um so beispielsweise einen hohen Fahrkomfort eines Fahrzeugs mit Retarder besonders bei der Personenbeförderung zu ermöglichen. Insbesondere sogenannte in der Leistung angehobene Wasserretarder sind im Bremsbetrieb äußerst laut. Das Dokument US 5 657 723 offenbart den Oberbegrift des Anspruchs 1.

Der Erfindung liegt die Aufgabe zugrunde, einen Retarder, insbesondere einen Wasserretarder, darzustellen, dessen Geräuschemission insbesondere im Bremsbetrieb gegenüber bekannten Lösungen minimiert ist. Ferner soll eine solche Ausführung dargestellt werden, welche sich kostengünstig herstellen lässt.

Diese Aufgabe wird durch einen hydrodynamischen Retarder mit den Merkmalen des Anspruchs 1 beziehungsweise durch einen Antriebsstrang mit einem Retarder gemäß des Anspruchs 7 gelöst. Die abhängigen Ansprüche beschreiben besonders vorteilhafte Weiterentwicklungen der Erfindung.

Die Erfinder haben erkannt, dass insbesondere die Gestaltung des Entleerkanals eines Retarders Auswirkungen auf die Geräuschemission hat. Dabei haben sie eine Entleerkanalform entwickelt, weiche sich hinsichtlich einer minimalen Geräuschemission als besonders günstig erwiesen hat. Der Entleerkanal ist als Ringkanal im Statorgehäuse des Retarders ausgebildet und weist im wesentlichen eine Kanalbreite auf, welche 2/10 bis 4/10 des Profildurchmessers des Rotorschaufelrads beträgt. Unter Profildurchmesser des Rotorschaufelrads, welcher insbesondere dem Profildurchmesser des Statorschaufelrads entspricht, versteht man den Außendurchmesser des Schaufelprofils einer Rotorschaufel.

Besonders vorteilhaft ist es, wenn die Kanalhöhe des Entleerkanals im wesentlichen 1/10 bis 2/10 des Profildurchmessers des Rotorschaufelrads beträgt. Ferner hat sich eine Kanalbreite des Entleerkanals von 3/10 und insbesondere von 3,5/10 des Profildurchmessers des Rotorschaufelrads als günstig erwiesen.

Unter dem Ausdruck "im wesentlichen" bei der Bemessung der Kanalhöhe beziehungsweise der Kanalbreite ist zu verstehen, dass der Entleerkanal insbesondere durchgehend eine Kanalbreite aufweist, welche 2/10 bis 4/10 des Profildurchmessers des Rotorschaufelrads beträgt. Entsprechendes gilt für die Kanalhöhe, diese beträgt vorzugsweise über ihrem gesamten Verlauf 1/10 bis 2/10 des Profildurchmessers des Rotorschaufelrads. Es sind jedoch auch Ausführungsformen denkbar, deren Kanäle an einem Ende abgeflacht sind, so dass nicht die gesamte Kanalbreite beziehungsweise die gesamte Kanalhöhe den genannten Anteil des Profildurchmessers aufweist. Auch diese Ausführungen sollen durch die erfindungsgemäße Ausbildung des Entleerkanals erfasst werden.

Auch durch die geeignete Auswahl eines Werkstoffs zumindest der Wandung des Entleerkanals kann positiv auf die Geräuschemission Einfluss genommen werden. So sind aufgrund ihres Dämpfungsverhaltens Werkstoffe vorteilhaft, die aus der nachstehenden Gruppe ausgewählt wurden.
- Nichteisenwerkstoffe
- Kunststoffe (vorteilhaft entsprechend des Einsatzbereiches temperatur- und druckfest)

Dabei kann entweder nur die die Strömung berührende Oberfläche des Entleerkanals mit einem solchen Werkstoff ausgebildet sein oder aber die gesamte Wandung des Entleerkanals. Ferner kann in einer besonderen Ausführung das gesamte Statorgehäuse mit einem solchen Werkstoff ausgebildet sein.

Insbesondere eine Kombination der vorgenannten Merkmale und die Ausbildung des Retarders als Wasserretarder, das heißt das Arbeitsmedium ist Wasser oder ein Wassergemisch, darunter ein Wasser-Glykol-Gemisch, bringt eine deutliche Geräuschoptimierung gegenüber bekannter Ausführungen mit sich. Ferner kann eine Minimierung der Geräuschemissionen dadurch erreicht werden, dass man auch die Anordnung des Retarders, beispielsweise in einem Antriebsstrang eines Kraftfahrzeugs, berücksichtigt. So ist es besonders vorteilhaft, wenn der Retarder in einem Kraftfahrzeugantrieb abtriebsseitig am Getriebe montiert ist. Dadurch kann weitgehend vermieden werden, dass das Getriebe als Resonanzkörper für die Geräuschemissionen des Retarders wirkt. Ein solcher Retarder wird auch als Sekundärwasserretarder bezeichnet.

Nachfolgend soll die Erfindung anhand der beigefügten Figur näher beschrieben werden.

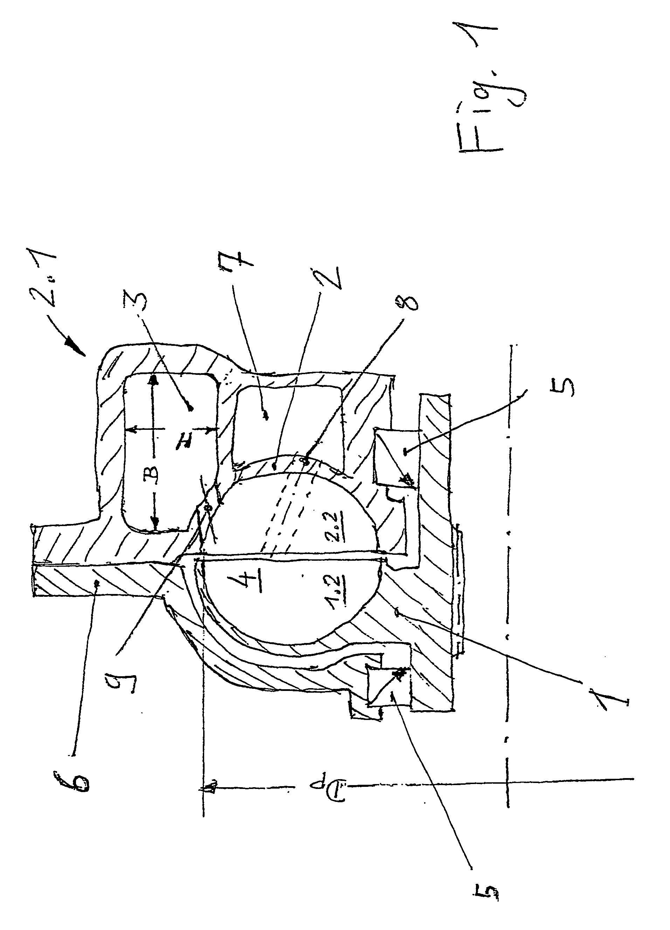

- Figur 1: zeigt einen Querschnitt durch einen Wasserretarder mit einem Entleerkanal und einem Füllkanal, welche im Statorgehäuse ausgebildet sind.

Der in der Figur 1 dargestellte Retarder weist einen Arbeitsraum 4 auf, welcher durch das Rotorschaufelrad 1 und das Statorschaufelrad 2 gebildet wird. Das Rotorschaufelrad 1 weist Schaufelprofile 1.2 und das Statorschaufelrad 2 Schaufelprofile 2.2 auf, welche wie bekannt gegenüberstehend im Arbeitsraum 4 angeordnet sind. Das Statorschaufelrad 2 ist einteilig mit dem Statorgehäuse 2.1 ausgebildet. Ferner erkennt man die im Statorgehäuse 2.1 ausgebildeten Strömungskanäle, nämlich den Füllkanal 7 und den Entleerkanal 3. Füllkanal 7 und Entleerkanal 3 sind dabei jeweils als Ringkanal ausgebildet und benachbart zueinander angeordnet, wobei sie durch eine Wand des Statorgehäuses 2.1 voneinander getrennt sind.

Das Rotorschaufelrad 1 ist integral mit einer Rotorwelle ausgebildet, welche durch Dichtungen 5 sowohl gegen das Statorgehäuse 2.1 als auch gegen ein mit dem Statorgehäuse 2.1 verbundenen, das Rotorschaufelrad 1 umschließendes Gehäuse 6 abgedichtet ist.

Das Rotorschaufelrad 1 und das Statorschaufelrad 2 beziehungsweise die Schaufelprofile 1.2 und 2.2 weisen jeweils einen Profildurchmesser auf, welcher in der Figur mit D_{P} bezeichnet ist.

Der Entleerkanal weist wie dargestellt eine Breite in Axialrichtung der Rotorwelle auf, welche mit B bezeichnet ist und eine Höhe in Radialrichtung der Rotorwelle, welche mit H bezeichnet ist. Diese Entleerkanalbreite B und gegebenenfalls Entleerkanalhöhe H wird mit den angegebenen erfindungsgemäßen Abmaßen ausgeführt, um so die Geräuschemission zu minimieren.

Im Bremsbetrieb gelangt das Arbeitsmedium, vorteilhaft Wasser beziehungsweise ein Wassergemisch, über den Füllkanal 7 in den Arbeitsraum 4. Dafür ist die Wandung im Statorgehäuse 2.1, welche den Füllkanal 7'von dem Arbeitsraum 4 trennt, mit Bohrungen 8 versehen, welche wie durch die gestrichelten Linien angedeutet, in Füllkanäle in den Schaufelprofilen 2.2 des Stators 2 münden. Statorschaufeln mit solch einem zuführenden Kanal oder Schlitz werden auch als Füllschaufeln bezeichnet. Der Retarder weist eine vorgegebene Anzahl solcher Füllschaufeln auf, beispielsweise kann jede zweite Schaufel als Füllschaufel ausgebildet sein.

Aus dem Arbeitsraum 4 in den Entleerkanal 3 gelangt das Arbeitsmedium über die Bohrungen 9 in der den Arbeitsraum von dem Entleerkanal trennenden Wandung des Statorgehäuses 2.1. Vorteilhaft ist diese Bohrung 9 radial im Bereich des Profildurchmessers D_{P} angeordnet, so dass das Arbeitsmedium - wie dargestellt - im wesentlichen oder vollständig auf einer radialen Position in den Entleerkanal 3 strömt, welche dem Außendurchmesser der Schaufelprofile entspricht. Ferner ist die Strömungslänge der Bohrung 9 vorteilhaft vergleichsweise kurz ausgeführt. Anschließend strömt das Arbeitsmedium in einer Ringströmung durch den Entleerkanal 3. Je nach Geschwindigkeit dieser Ringströmung und Austrittsgeschwindigkeit des Arbeitsmediums durch die Bohrungen 9 schlägt das Arbeitsmedium auf die der Bohrung 9 gegenüberliegenden Wand des Statorgehäuses 2.1. Ferner ist ein Anschlag des Arbeitsmediums an die radial außen liegende Wand des Entleerkanals 3 denkbar. Dieser Anschlag erzeugt Klopfgeräusche. Durch die erfindungsgemäße Ausbildung des Entleerkanals können die Klopfgeräusche jedoch minimiert werden. Zudem ist es möglich, kostengünstige Werkstoffe, insbesondere andere Werkstoffe als Metall, zu verwenden, was zu einer zusätzlichen Dämpfung des Tropfenschlags führen kann.

### Bezugszeichenliste

- 1: Rotorschaufelrad
- 1.2: Rotorschaufelprofil
- 2: Statorschaufelrad
- 2.1: Statorgehäuse
- 2.2: Statorschaufelprofil
- 3: Entleerkanal
- 4: Arbeitsraum
- 5: Dichtung
- 6: Gehäuse
- 7: Füllkanal
- 8: Bohrung
- 9: Bohrung

## Patentansprüche

1. Hydrodynamischer Retarder, insbesondere Wasserretarder, mit einem torusförmigen Arbeitsraum (4), welcher von einem Rotorschaufelrad (1) und einem Statorschaufelrad (2) gebildet wird;
das Statorschaufelrad (2) weist ein Statorgehäuse (2.1) auf, in welchem ein Entleerkanal (3) ausgebildet ist, wobei
der Entleerkanal (3) im wesentlichen die Form eines Ringkanals aufweist, der durch Bohrungen im Statorschaufelrad (1) mit dem Arbeitsraum (4) verbunden ist;
**gekennzeichnet durch** die folgenden Merkmale:
der Entleerkanal (3) weist im wesentlichen eine Kanalbreite (B) auf, welche 2/10 bis 4/10 des Profildurchmessers (D_{P}) des Rotorschaufelrads (1) beträgt.

2. Hydrodynamischer Retarder gemäß Anspruch 1, **dadurch gekennzeichnet, dass** der Entleerkanal (3) im wesentlichen eine Kanalhöhe (H) aufweist, die 1/10 bis 2/10 des Profildurchmessers (D_{P}) des Rotorschaufelrads beträgt.

3. Hydrodynamischer Retarder gemäß einem der Ansprüche 1 oder 2, **dadurch gekennzeichnet, dass** die Kanalbreite (B) des Entleerkanals (3) im wesentlichen 3/10 oder 3,5/10 des Profildurchmessers (DP) des Rotorschaufelrads (1) beträgt.

4. Hydrodynamischer Retarder gemäß einem der Ansprüche 1 bis 3, **dadurch gekennzeichnet, dass** wenigstens die Wandung des Entleerkanals (3) und insbesondere das gesamte Statorgehäuse aus einem der nachfolgenden Werkstoffe ausgeführt ist:
- Nichteisenwerkstoff
- Kunststoff

5. Hydrodynamischer Retarder gemäß einem der Ansprüche 1 bis 4, **dadurch gekennzeichnet, dass** der Retarder als Arbeitsmedium ein Kühlmedium eines Kraftfahrzeugkühlkreislaufes aufweist, insbesondere Wasser oder ein Wasser-Glykol-Gemisch.

6. Hydrodynamischer Retarder gemäß einem der Ansprüche 1 bis 5, **dadurch gekennzeichnet, dass** der Retarder ein Sekundärretarder ist.

7. Antriebsstrang, insbesondere Kraftfahrzeugantrieb, umfassend einen Retarder gemäß einem der Ansprüche 1 bis 6, mit
einem Motor und
einem Getriebe,
**dadurch gekennzeichnet, dass**
der Retarder (10) abtriebsseitig am Getriebe (6) montiert ist.

## Claims

1. A hydrodynamic retarder, especially a water retarder, comprising a toroidal working chamber (4) which is formed by a rotor blade wheel (1) and a stator blade wheel (2); the stator blade wheel (2) comprises a stator housing (2.1) in which a discharging channel (3) is formed, with the discharging channel (3) substantially having the shape of an annular channel which is connected with the working chamber (4) by bores in the stator blade wheel (1);
**characterized by** the following features:
the discharging channel (3) substantially comprises a channel width (B) which is 2/10^{th} to 4/10^{th} of the profile diameter (D_{P}) of the rotor blade wheel (1).

2. A hydrodynamic retarder according to claim 1, **characterized in that** the discharging channel (3) substantially comprises a channel height (H) which is 1/10^{th} to 2/10^{th} of the profile diameter (Dₚ) of the rotor blade wheel.

3. A hydrodynamic retarder according to one of the claims 1 or 2, **characterized in that** the channel width (B) of the discharging channel (3) is substantially 3/10^{th} or 3.5/10^{th} of the profile diameter (DP) of the rotor blade wheel (1).

4. A hydrodynamic retarder according to one of the claims 1 to 3, **characterized in that** at least the wall of the discharging channel (3) and especially the entire stator housing is made of one of the following materials:
- non-ferrous material;
- plastic.

5. A hydrodynamic retarder according to one of the claims 1 to 4, **characterized in that** the retarder comprises a cooling medium of a motor-vehicle cooling circulation as a working medium, especially water or a water-glycol mixture.

6. A hydrodynamic retarder according to one of the claims 1 to 5, **characterized in that** the retarder is a secondary retarder.

7. A power train, especially a motor-vehicle drive, comprising a retarder according to one of the claims 1 to 6, comprising
an engine, and
a transmission,
**characterized in that** the retarder (10) is mounted on the transmission (6) on the power take-off side.

## Revendications

1. Retardateur hydrodynamique, en particulier retardateur hydraulique, avec un espace de travail toroïdal (4) formé par une roue à aubes de rotor (1) et une roue à aubes de stator (2) ;
la roue à aubes de stator (2) possède un corps de stator (2.1) dans lequel un canal de vidange (3) est formé,
lequel canal de vidange (3) a sensiblement la forme d'un canal annulaire, communiquant par des alésages dans la roue à aubes de stator (1) avec l'espace de travail (4) ;
**caractérisé en ce que** le canal de vidange (3) a pour l'essentiel une largeur de canal (B) qui représente 2/10^{e} à 4/10^{e} du diamètre de profil (D_{P}) de la roue à aubes de rotor (1).

2. Retardateur hydrodynamique selon la revendication 1, **caractérisé en ce que** le canal de vidange (3) a pour l'essentiel une hauteur de canal (H) qui représente 1/10^{e} à 2/10^{e} du diamètre de profil (D_{P}) de la roue à aubes de rotor.

3. Retardateur hydrodynamique selon l'une quelconque des revendications 1 ou 2, **caractérisé en ce que** la largeur de canal (B) du canal de vidange (3) représente sensiblement 3/10^{e} ou 3,5/10^{e} du diamètre de profil (D_{P}) de la roue à aubes de rotor (1).

4. Retardateur hydrodynamique selon l'une quelconque des revendications 1 à 3, **caractérisé en ce qu'**au minimum la paroi du canal de vidange (3) et en particulier l'ensemble du corps de stator sont faits de l'un des matériaux suivants :
- matériau non ferreux
- matière plastique.

5. Retardateur hydrodynamique selon l'une quelconque des revendications 1 à 4, **caractérisé en ce que** le retardateur possède comme fluide de travail un fluide de refroidissement d'un circuit de refroidissement de véhicule, en particulier de l'eau ou un mélange d'eau et de glycol.

6. Retardateur hydrodynamique selon l'une quelconque des revendications 1 à 5, **caractérisé en ce que** le retardateur est un retardateur secondaire.

7. Chaîne de transmission, en particulier transmission de véhicule à moteur, comprenant un retardateur selon l'une quelconque des revendications 1 à 6, avec
un moteur et
un engrenage,
**caractérisée en ce que** le retardateur (10) est monté sur l'engrenage (6) du côté de la sortie.
